# EUROPEAN PATENT SPECIFICATION

(11) **EP 1 244 109 B1**
(45) Date of publication and mention of the grant of the patent: **21.06.2006**
(21) Application number: 01122230.4
(22) Date of filing: 17.09.2001
(51) Int. Cl.: G11B 33/12

(54) **Information processing apparatus having housing capable of removably storing a plurality of hard disc drives**
Informationsverarbeitungsgerät mit Gestell geeignet zur abnehmbaren Speicherung einer Mehrheit von Festplattenlaufwerke
Appareil de traitement d'information avec châssis pouvant contenir de manière amovible une pluralité d'unités à disques durs

(30) Priority: 16.03.2001 JP 2001076838
(43) Date of publication of application: 25.09.2002
(73) Proprietor: KABUSHIKI KAISHA TOSHIBA, Tokyo (JP)
(72) Inventor: Nagasawa, Ichiro, Kabushiki Kaisha Toshiba, Minato-ku, Tokyo 105-8001 (JP)
(74) Representative: Henkel, Feiler & Hänzel

(56) References cited:
- EP-A- 0 965 992
- DE-U- 20 014 618
- DE-U- 29 809 850
- US-A- 5 751 551
- US-A- 5 947 572
- US-A- 6 052 278
- "MODULAR DISK FILE STRUCTURE" IBM TECHNICAL DISCLOSURE BULLETIN, IBM CORP. NEW YORK, US, vol. 38, no. 8, 1 August 1995 (1995-08-01), pages 505-506, XP000534608 ISSN: 0018-8689

## Description

The present invention relates to an information processing apparatus, such as a server of the so-called rack-mount type, capable of storing an increased number of hard disc drive modules.

A server of the rack-mount type comprises server bodies, which contain therein various function parts, such as a microprocessor, CD-ROM drive, power unit, hard disc drives, etc., and extension units that are used to increase the storage capacity of the server bodies. The server bodies and the extension units have their respective housings. The housings are removably supported in a stand called a cabinet rack.

The stand is in the form of an elongate box that extends vertically. The stand has an opening in its front end. The server bodies and the extension units are loaded into and unloaded from the stand through the opening, which can be opened or closed by means of a door. Four mount frames are arranged in the stand. The mount frames extend upward from the four corners of the stand, and two of them face each other across the opening. Therefore, the width of the opening is settled depending on the distance between the two mount frames. In a conventional 19-inch stand, the width of the opening is adjusted to 450 mm or thereabout.

Further, the mount frames support a plurality of slide rails. The slide rails are arranged horizontally in the depth direction of the stand. The respective housings of the server bodies and the extension units are fixed between the slide rails.

Since the width of the opening is adjusted to 450 mm or thereabout in the conventional 19-inch stand, the width of a housing that can be set in the stand is naturally set at about 430 mm in consideration of the thickness of the slide rails. Usually, the depth of the housing is greater than its width, so that the housing itself is large-sized. Inevitably, therefore, the server bodies and the extension units are weighty and bulky.

To cope with this problem, the inventor hereof has recently tried to adjust the width of the housing to half that of a conventional one and mount two small housings in a stand in a manner such that they are arranged side by side on one shelf. However, this arrangement arouses the following problem.

In a conventional extension unit, for example, a plurality of hard disc drives are arranged in four rows in a housing. If the width of the housing is halved, therefore, the space inside the housing is reduced substantially, so that the hard disc drives may not be able to be arranged side by side, in some cases.

More specifically, the hard disc drives are supported individually on trays and inserted together with the trays in the housing so that they can be loaded into or unloaded from the housing without switching off the power. Further, each tray is provided with a lever-type loading-unloading mechanism for pushing in each hard disc drive toward connectors in the housing or drawing it out away from the connectors. This loading-unloading mechanism is designed to slide the tray by catching the housing, and has a size that covers the overall width of the tray.

In the case where a plurality of hard disc drives are arranged side by side in a housing with a reduced mounting space, therefore, the loading-unloading mechanism that is incorporated in each tray may possibly be obstructive. Thus, in halving the size of the housing, it is essential to take a measure to realize high-density mounting of the hard disc drives.

The present invention has been contrived in consideration of these circumstances, and its object is to provide an information processing apparatus designed so that a mechanism for pushing into or pushing out a module from a housing can be compactified, and capable of storing a plurality of modules with high density despite a narrowed space in the housing.

In order to achieve the above object, an information processing apparatus according to a first aspect of the present invention comprises: a housing having a loading gate at one end thereof, the housing including a storage chamber continuous with the loading gate, a first connector located in the storage chamber, and first and second engaging portions projecting into the storage chamber; and a module capable of being removably loaded into the storage chamber through the loading gate, the module including a main body having a second connector detachably connected to the first connector, a tray supporting the main body and capable of being inserted into the storage chamber, and an operating lever located at an end portion of the tray on the side remote from the second connector.

The operating lever is rockable between a first position in which the operating lever extends in the direction of insertion of the tray and a second position in which the operating lever extends along the end portion of the tray so as to cross the first position. Further, the operating lever includes a first push portion, adapted to touch the first engaging portion of the housing to push in the module toward the first connector when the operating lever is rocked from the first position to the second position in the storage chamber, and a second push portion, adapted to touch the second engaging portion of the housing to push out the module away from the first connector when the operating lever is rocked from the second position to the first position in the storage chamber.

If the operating lever is rocked from the first position to the second position with the module in the storage chamber of the housing, according to this arrangement, the first push portion of the operating lever touches the first engaging portion of the housing. Thereupon, the region of contact between the first push portion and the first engaging portion is subjected to a force to push the module in the rocking direction of the operating lever, so that the module is pushed in toward the first connector, supported by the contact region. Thus, the second connector of the module is connected to the first connector.

If the operating lever is rocked from the second position to the first position with the second connector connected to the first connector, the second push portion of the operating lever touches the second engaging portion of the housing. Thereupon, the region of contact between the second push portion and the second engaging portion is subjected to a force to push the module in the rocking direction of the operating lever, so that the module is pushed out toward the loading gate, supported by the contact region. Thus, the second connector of the module is disengaged from the first connector, that is, these connectors are disconnected from each other.

Since the first and second engaging portions that are touched by the operating lever project into the storage chamber, their regions of contact with the operating lever never project outside the housing. Thus, the overall length of the operating lever can be shortened, and the module including the operating lever can be narrowed and compactified. If the space in the storage chamber is reduced to meet the demand for the miniaturization of the housing, therefore, the module can be set in the storage chamber without effort.

An information processing apparatus according to the precharacterizing part of claim 1 is known from EP-0965992 A1.

A similar device is disclosed in US-5947572-A and in DE 20014618 U1.

According to the present invention the above object is achieved by an information processing apparatus according to claim 1. The dependent claims are directed to further advantageous aspects of the present invention.

The invention can be more fully understood from the following detailed description when taken in conjunction with the accompanying drawings, in which:
FIG. 1 is a front view of a server of the rack-mount type according to an embodiment of the present invention;
FIG. 2 is a sectional view of the server showing two extension units arranged side by side in an equipment storage chamber in a stand;
FIG. 3 is a sectional view of the server showing structures for connection between the stand and the front end portion of a shelf and between the stand and the front end portion of a extension unit;
FIG. 4 is a sectional view of the server showing structures for connection between the stand and the rear end portion of the shelf and between the stand and the rear end portion of the extension unit;
FIG. 5 is a sectional view of the server showing the shelf fixed to the stand;
FIG. 6 is a perspective view showing two extension units set on the shelf;
FIG. 7A is a front view showing the positional relationship between a mount frame and a bracket;
FIG. 7B is a front view showing the way the shelf is fixed to the mount frame;
FIG. 8 is a perspective view of one of the extension units;
FIG. 9 is a front view of the extension unit having four hard disc drive modules set in on housing;

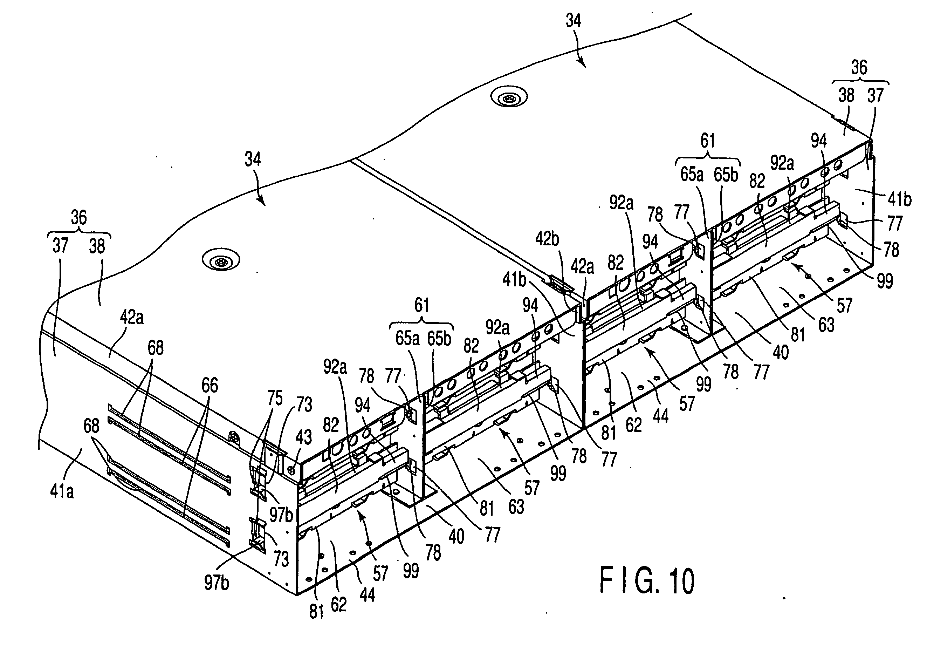

FIG. 10 is a perspective view showing two extension units arranged side by side;
FIG. 11 is a front view showing the two extension units arranged side by side;
FIG. 12 is a sectional view of the extension unit having hard disc drive modules in the housing;
FIG. 13 is a front view showing the extension unit fixed to the mount frame;
FIG. 14 is a perspective view showing the positional relationship between a first storage chamber of the housing and the hard disc drive module;
FIG. 15A is a side view of the housing showing first guide portions formed on an upright plate;
FIG. 15B is a sectional view of the extension unit showing the positional relationship between a tray of the hard disc drive module and first and second guide portions;
FIG. 16 is a perspective view of the extension unit showing the hard disc drive module inserted in the first storage chamber of the housing;
FIG. 17A is a perspective view of the extension unit showing a first push lug of an operating lever abutting against a first engaging wall of the housing;
FIG. 17B is a sectional view of the extension unit showing the first push lug of the operating lever abutting against the first engaging wall of the housing;
FIG. 18 is a perspective view of the extension unit showing the positional relationship between the first push lug of the operating lever and the first engaging wall of the housing;
FIG. 19 is a sectional view of the extension unit showing the hard disc drive module set in the first storage chamber;

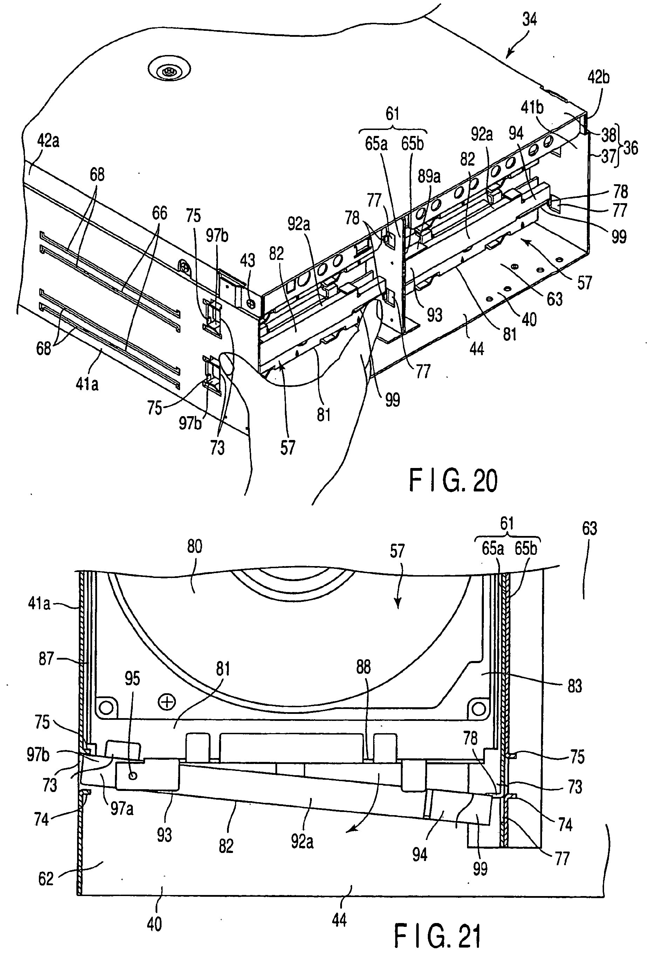

FIG. 20 is a perspective view of the extension unit showing the way a stopper portion of the operating lever and the housing are disengaged from each other; and
FIG. 21 is a sectional view of the extension unit showing a second push lug of the operating lever abutting against a second engaging wall of the housing.

A server of the rack-mount type according to an embodiment of the present invention will now be described with reference to the accompanying drawings.

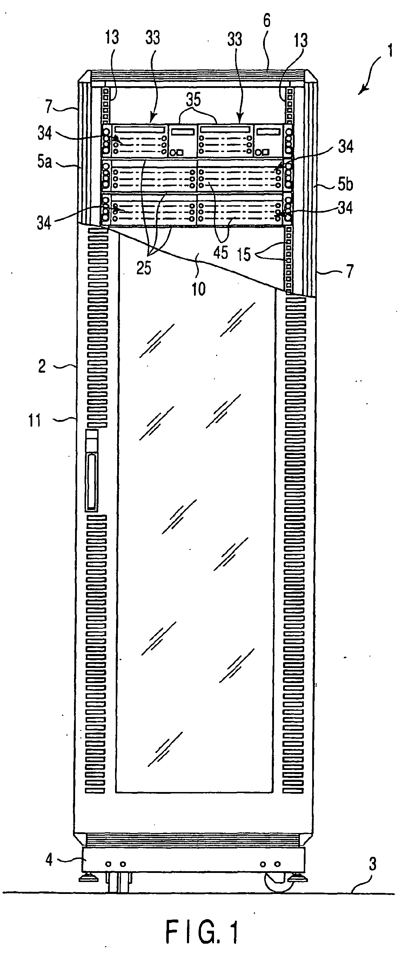

FIG. 1 shows a server 1 of the rack-mount type for use as an information processing apparatus. The server 1 is provided with a stand 2 called a cabinet rack. The stand 2 is in the form of an elongate box that stands vertically upright on a floor surface 3.

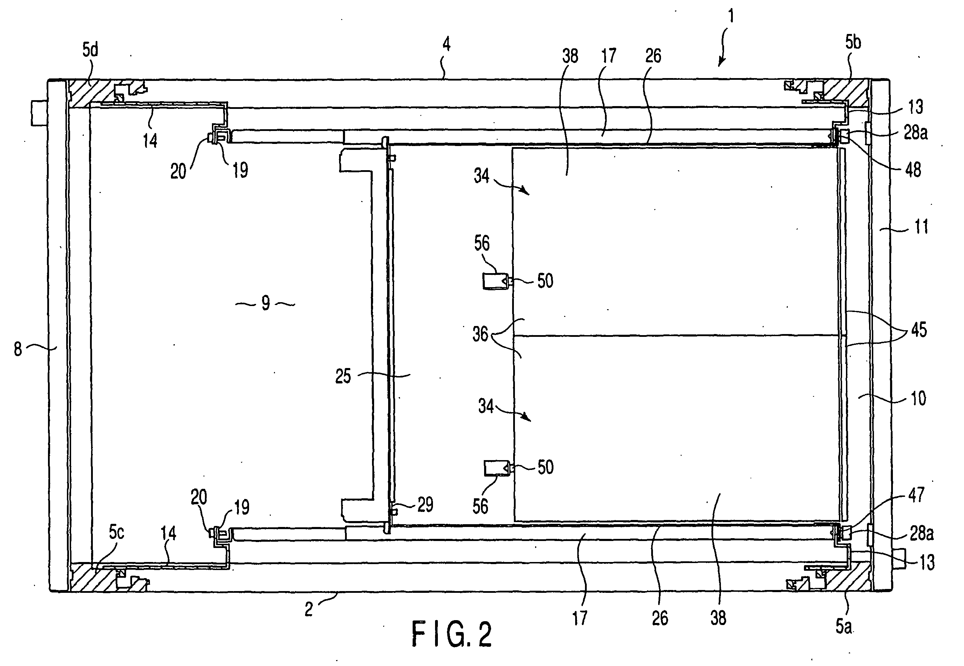

As shown in FIGS. 1 and 2, the stand 2 is provided with a rectangular pedestal 4 set on the floor surface 3, four support posts 5a to 5d that are set up vertically on the four corners of the pedestal 4, and a top plate 6, left- and right-hand side plates 7, and a rear plate 8 that are fixed to the support posts 5a to 5d. The pedestal 4, top plate 6, side plates 7, and rear plate 8 define an equipment storage chamber 9 in the stand 2.

The stand 2 has an opening 10 in its front face. The opening 10 extends in the height direction of the stand 2 and is continuous with the equipment storage chamber 9. The opening 10 is opened and closed by means of a door 11 that is attached to the front end of the stand 2.

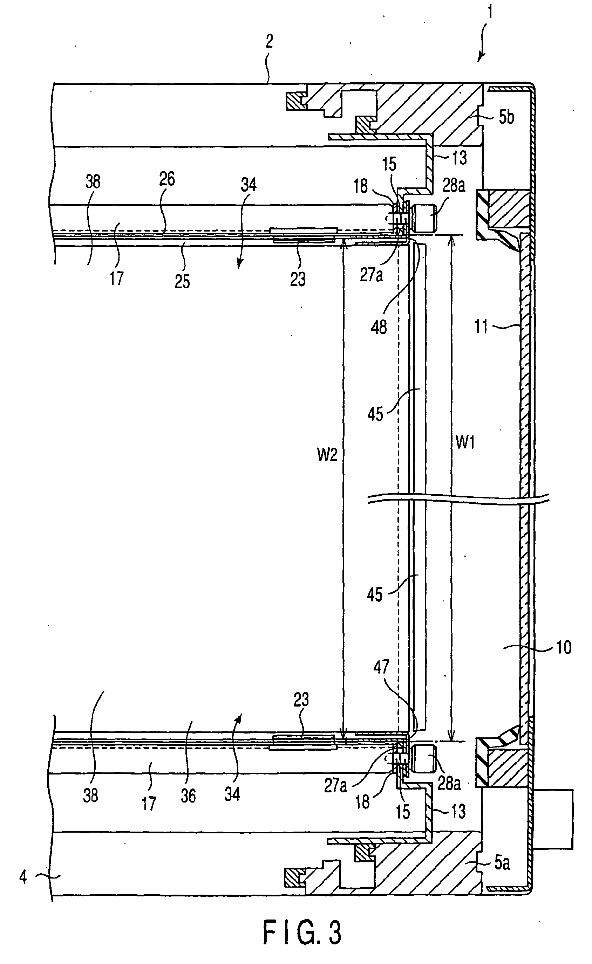

As shown in FIGS. 2 and 3, the two support posts 5a and 5b that are situated at the front end of the pedestal 4 face each other with the opening 10 between them. Mount frames 13 are fixed to the support posts 5a and 5b, individually. The mount frames 13 extend in the height direction of the stand 2 and are exposed to the opening 10. Therefore, a width W1 of the opening 10 is settled depending on the distance between the frames 13. In the conventional 19-inch stand, the width W1 of the opening 10 is adjusted to 450 mm or thereabout.

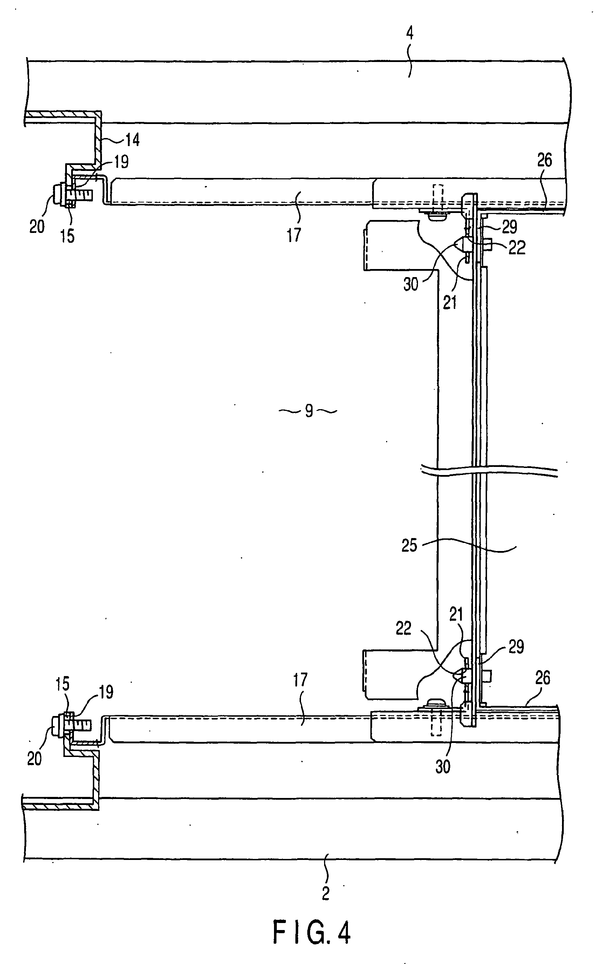

As shown in FIGS. 2 and 4, rear frames 14 are fixed individually to the two support posts 5c and 5d that are situated at the rear end of the pedestal 4. The rear frames 14 extend in the height direction of the stand 2. The rear frames 14 and the mount frames 13 face one another in the depth direction of the stand 2. Each of the frames 13 and 14 has a large number of apertures 15. The apertures 15 are arranged in a line at spaces in the height direction of the stand 2.

As shown in FIGS. 2 to 5, a set of brackets 17 are stretched between the mount frames 13 and the rear frames 14. Each bracket 17 is in the form of a flat plate. Each bracket 17 includes a first flange portion 18 that abuts against the back of each mount frame 13 and a second flange portion 19 that abuts against the back of each rear frame 14. The first and second flange portions 18 and 19 are fixed to the mount frame 13 and the rear frame 14, respectively, by means of a plurality of screws 20 in a height position corresponding to desired ones of the apertures 15.

Thus, the brackets 17 are held horizontal in the depth direction of the stand 2 and face one another in the width direction of the stand 2. In the case of the present embodiment, the brackets 17 are located individually in three positions that are spaced in the height direction of the stand 2.

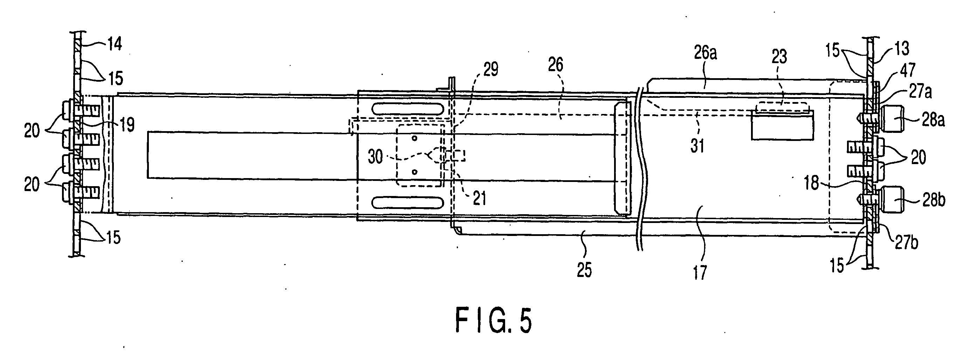

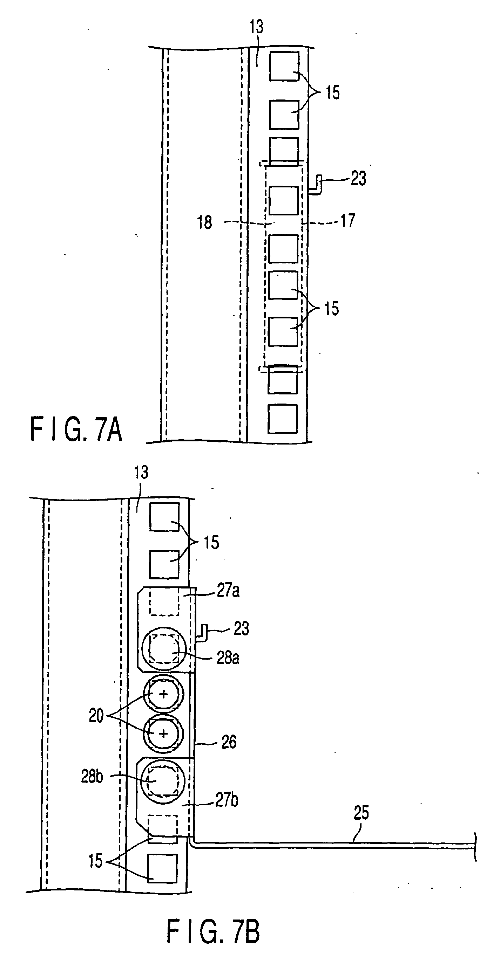

As shown in FIGS. 4 and 5, a stopper 21 is fixed to each bracket 17. The stopper 21 projects into the equipment storage chamber 9 in an intermediate portion with respect to the depth direction of the stand 2. An engaging hole 22 is formed in the distal end portion of each stopper 21. Further, a guide portion 23 is formed on the front end portion of each bracket 17 that adjoins the door 11. As seen from FIG. 7A, each guide portion 23 slightly projects between the brackets 17.

As shown in FIG. 1, three shelves 25 are arranged in the equipment storage chamber 9 of the stand 2. The shelves 25 are stacked in layers with spaces in the height direction of the stand 2. As shown in FIGS. 2 to 6, each shelf 25 extends horizontally between the brackets 17. Each shelf 25 has left- and right-hand side plates 26 that rise along the brackets 17, individually. The shelves 25 can be removably loaded into the chamber 9 through the opening 10 of the stand 2. Thus, a width W2 of each shelf 25 is restricted to 440 mm or less, which is smaller than the width W1 of the opening 10.

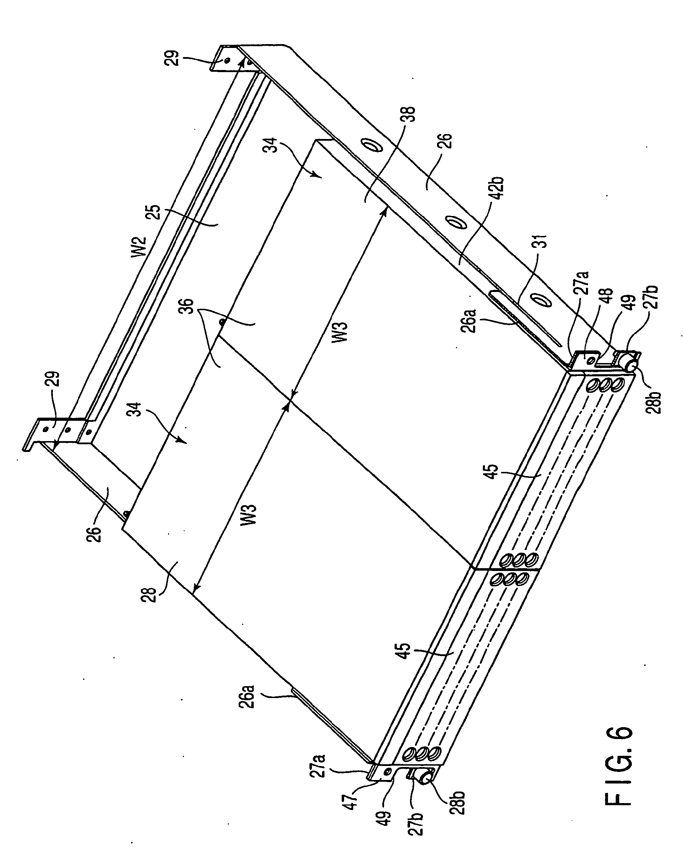

As shown in FIGS. 6 and 7B, each side plate 26 of each shelf 25 has a pair of tongue portions 27a and 27b that extend outward from its front end portion at right angles thereto. The tongue portions 27a and 27b are vertically arranged so as to face the front face of their corresponding mount frame 13. The screws 20 that fasten each bracket 17 to its corresponding mount frame 13 are situated between the tongue portions 27a and 27b. The.tongue portions 27a and 27b are fixed to each bracket 17 by means of decorative screws 28a and 28b, respectively. The decorative screws 28a and 28b are screwed into the first flange portion 18 of each bracket 17 through the apertures 15, individually. Thus, the front end portion of each shelf 25 is fixed in a desired height position on the mount frames 13 by means of the tongue portions 27a and 27b.

As shown in FIGS. 4 to 6, each side plate 26 of each shelf 25 has a flange portion 29 that extend inward from its rear end portion at right angles thereto. The flange portion 29 faces the stopper 21 of its corresponding bracket 17. An engaging pin 30 that projects toward the stopper 21 is fixed to the flange portion 29. The engaging pin 30 is fitted in the engaging hole 22 of the stopper 21, whereby the rear end portion of each shelf 25 is held on each corresponding bracket 17.

As shown in FIGS. 5 and 6, each shelf 25 has upward projections 26a on the respective front end portions of its side plates 26. A slit 31 is formed in each projection 26a. The slit 31 extends in a line so as to be continuous with the upper edge of its corresponding side plate 26 and opens backward at the rear end of the projection 26a. The guide portion 23 of each bracket 17 is slidably caught by its corresponding slit 31, whereupon the front end portion of each shelf 25 held by means of the bracket 17. If the decorative screws 28a and 28b are removed to cancel the fixation between the shelf 25 and the bracket 17, therefore, the shelf 25 can be drawn out ahead of the bracket 17 within the range of the slit 31.

As seen from FIG. 1, the equipment storage chamber 9 of the stand 2 contains therein, for example, two server bodies 33 and four extension units 34. The two server bodies 33 are arranged side by side in the width direction on the uppermost shelf 25. The four extension units 34 serve to increase the storage capacity of the server bodies 33. The extension units 34 are arranged side by side in pairs in the width direction on the two shelves 25 under the server bodies 33.

Each server body 33 has a metallic housing 35. The housing 35 is in the form of an elongate quadrangular box that extends in the depth direction of the stand 2. Various components are mounted in the housing 35 with high density. The components include, for example, a circuit board mounted with a microprocessor, CD-ROM drive, hard disc drives, power unit, etc. The respective housings 35 of the two server bodies 33 are held between the side plates 26 of the uppermost shelf 25.

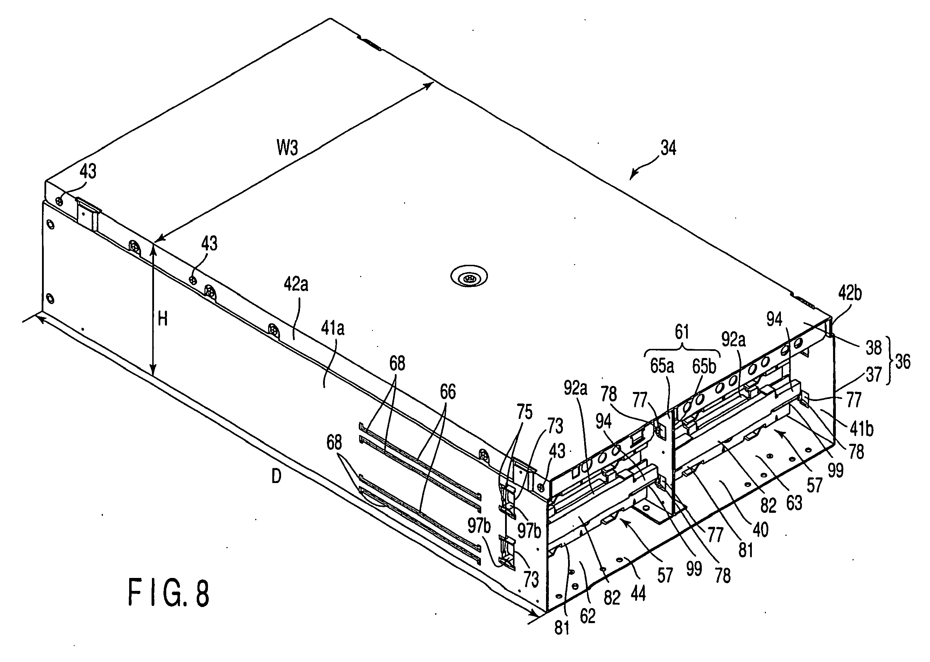

Each extension unit 34 for use as an information storage unit has a metallic housing 36, as shown in FIGS. 6 and 8. The housing 36 is in the form of an elongate quadrangular box that extends in the depth direction of the stand 2. A width W3 of the housing 36 is equal to half of the width W2 of each shelf 25. Thus, the respective housings 36 of each pair of extension units 34 are arranged in the width direction of each shelf 25 on the shelf 25, and are held between the side plates 26 of the shelf 25.

The housing 35 of each server body 33 and the housing 36 of each extension unit 34 share their width W3, depth D, and height H. Accordingly, one server body 33 and one extension unit 34 can be combined and arranged side by side on one shelf 25.

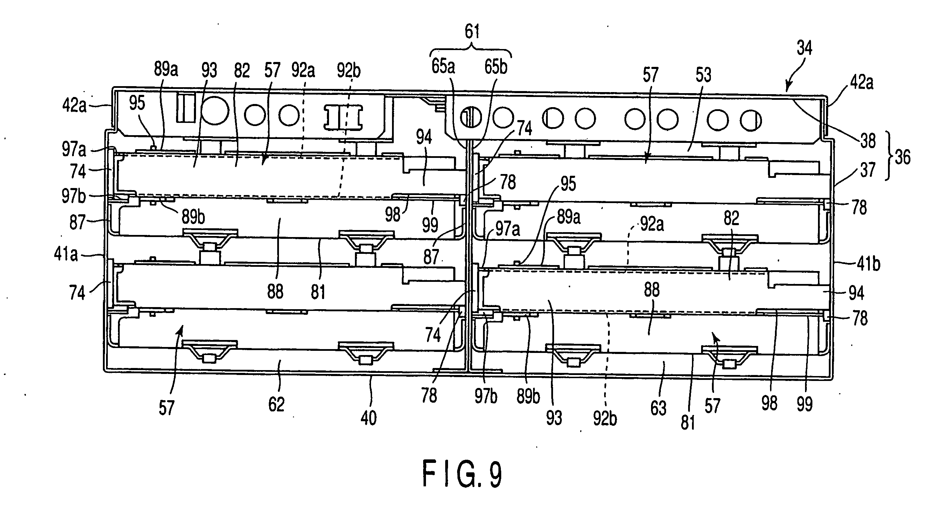

As shown in FIGS. 8 and 9, each housing 36 is composed of a housing body 37 and a top plate 38. The housing body 37 includes a bottom plate 40 and left-and right-hand upright plates 41a and 41b. The bottom plate 40 is superposed on the shelf 25. The upright plates 41a and 41b rise from the left- and right-hand side edge portions of the bottom plate 40, respectively. The respective upright plates 41a and 41b of each two adjacent housings 36 are joined together on the shelf 25. The top plate 38 includes flange portions 42a and 42b that extend individually downward from the left- and right-hand side edge portions at right angles thereto. The flange portions 42a and 42b are fixed to the respective upper end portions of their corresponding upright plates 41a and 41b by means of a plurality of screws 43.

The housing 36 has a rectangular loading gate 44 in its front end portion. The gate 44 has an opening that extends horizontally in the width direction of the stand 2, and can be opened and closed by means of a front door 45 shown in FIG. 6.

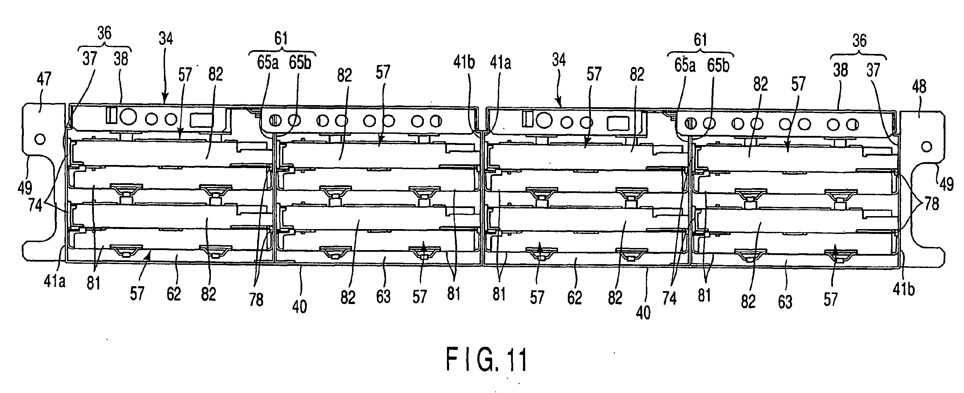

As shown in FIGS. 6 and 11, the housing 36 of the left-hand extension unit 34, out of the two extension units 34 placed on each shelf 25, is provided with a fitting 47 on the front end portion of its left-hand upright plate 41a. The fitting 47 is screwed to the upright plate 41a and projects leftward from the front end portion of the plate 41a. Further, the housing 36 of the extension unit 34 that is situated on the right-hand side of the shelf 25 is provided with another fitting 48 on the front end portion of its right-hand upright plate 41b. The fitting 48 is screwed to the upright plate 41b and projects rightward from the front end portion of the plate 41b.

The respective fittings 47 and 48 of the housings 36 are removably fixed to the mount frames 13 of the stand 2. Since this fixing structure is used in common on either side of each shelf 25, the fitting 47 of the left-hand housing 36 will be described representatively.

As shown in FIGS..3 and 13, the fitting 47 is superposed on the tongue portions 27a and 27b of the shelf 25. The fitting 47 has a notch 49. The notch 49 serves to make room for the screws 20 that fix the bracket 17 to the mount frame 13 and the decorative screw 28b that fixes the second tongue portion 27b to the mount frame 13. The upper end portion of the fitting 47 that is superposed on the upper tongue portion 27a is fixed to the mount frame 13 by means of the decorative screw 28a. Thus, the front end portion of the housing 36 and the tongue portion 27a of the bracket 17 are fixed to the mount frame 13 by means of the common decorative screw 28a.

As shown in FIG. 2, engaging pins 50 protrude backward from the housing 36 are fixed to the rear end portion of the housing 36. The pins 50 are removably fitted in their corresponding stoppers 56 that are fixed to the rear part of the shelf 25, whereby the rear end portion of the housing 36 is held on the shelf 25.

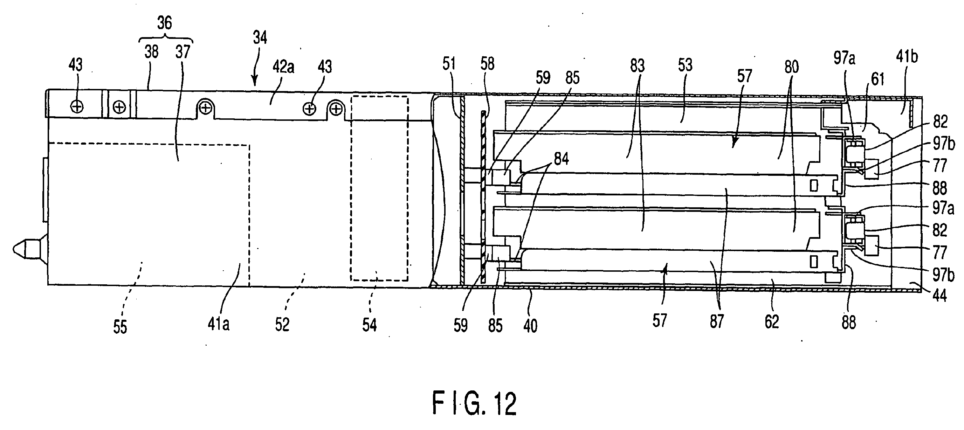

The interior of the housing 36 is divided between a machine storage chamber 52 and a hard disc storage chamber 53 by means of a partition plate 51 shown in FIG. 12. The machine storage chamber 52 is situated in the rear half of the housing 36. A cooling fan 54 and a power unit 55 are stored in the chamber 52.

The hard disc storage chamber 53 is situated in the front half of the housing 36, and has a size large enough to store four hard disc drive modules 57. A circuit board 58 is supported on the front face of the partition plate 51 that faces the storage chamber 53. The circuit board 58 rises vertically from the termination of storage chamber 53 and faces the loading gate 44 of the housing 36. Four first connectors 59 are mounted on the front face of the circuit board 58. The first connectors 59 are spaced in the height direction of the housing 36 and arranged in two rows in the width direction of the housing 36.

As shown in FIGS. 8 and 9, the hard disc storage chamber 53 is divided between first and second storage chambers 62 and 63 by means of a partition plate 61 of sheet metal. The partition plate 61 is fixed to a bottom plate 40 of the housing 36 and extends in the depth direction of the housing 36 between the loading gate 44 and the circuit board 58. Thus, the first and second storage chambers 62 and 63 are arranged in the width direction of the housing 36, and two of the first connectors 59 are situated at the termination of each of the storage chambers 62 and 63.

The partition plate 61 is formed by joining first and second metal plates 65a and 65b together. The first metal plate 65a is exposed to the first storage chamber 62 and faces the left-hand upright plate 41a of the housing 36. The second metal plate 65b is exposed to the second storage chamber 63 and faces the right-hand upright plate 41b of the housing 36.

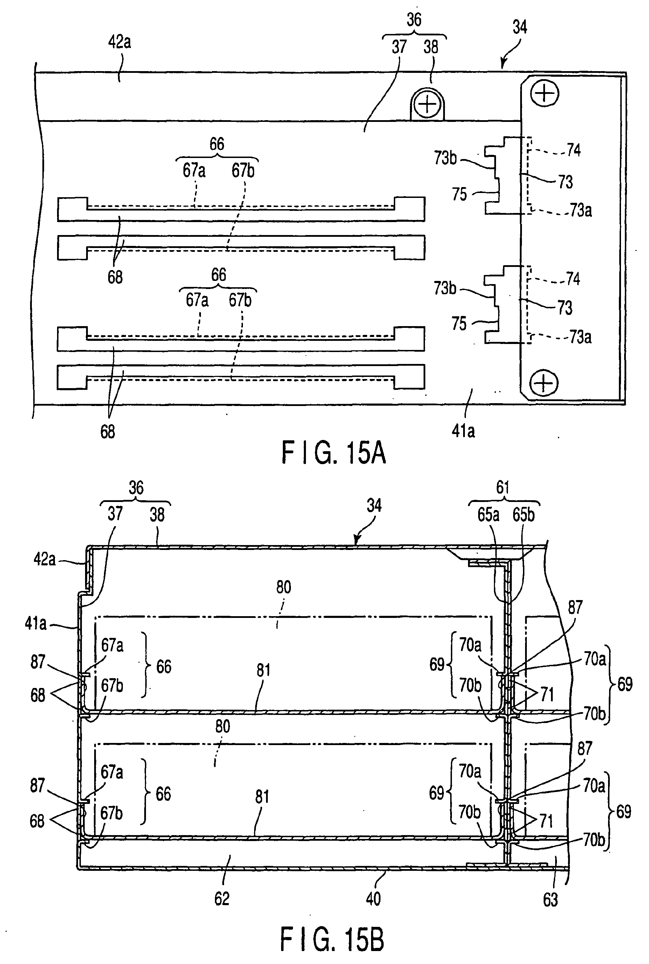

As seen from FIG. 15B, each of the first and second storage chambers 62 and 63 is provided with first and second pairs of guide portions 66 and 69 for loading and unloading the hard disc drive modules 57. The first and second guide portions 66 and 69 in the first storage chamber 62 will be described representatively.

As shown in FIGS. 8, 15A and 15B, the first guide portions 66 are formed on the left-hand upright plate 41a of the housing 36, and are situated between the loading gate 44 of the housing 36 and the circuit board 58. The first guide portions 66 extend straight in the depth direction of the housing 36, and are arranged parallel to each other at a space in the height direction of the housing 36.

Each of the first guide portions 66 includes a pair of guide walls 67a and 67b. The guide walls 67a and 67b are formed by rectangularly raising a part of the upright plate 41a. The guide walls 67a and 67b slightly project into the first storage chamber 62 and face each other in the height direction of the housing 36. The upright plate 41a has slit-shaped notches 68 that are formed by raising the guide walls 67a and 67b. Each notch 68 is situated between each two adjacent guide walls 67a and 67b.

As shown in FIG. 15B, the second guide portions 69 are formed on the first metal plate 65a. The second guide portions 69 are situated between the loading gate 44 of the housing 36 and the circuit board 58. The second guide portions 69 extend straight in the depth direction of the housing 36, and are arranged parallel to each other at a space in the height direction of the housing 36.

Each of the second guide portions 69 includes a pair of guide walls 70a and 70b. The guide walls 70a and 70b are formed by rectangularly raising a part of the first metal plate 65a. The guide walls 70a and 70b slightly project into the first storage chamber 62 and face each other in the height direction of the housing 36. The first metal plate 65a has slit-shaped notches 71 that are formed by raising the guide walls 70a and 70b. Each notch 71 is situated between each two adjacent guide walls 70a and 70b.

The first and second guide portions 66 and 69 face one another with the first storage chamber 62 between them. Thus, the hard disc drive modules 57 can be loaded into or unloaded from the first storage chamber 62 along the first and second guide portions 66 and 69.

In the second storage chamber 63, the first guide portions 66 are formed on the right-hand upright plate 41b of the housing 36. The second guide portions 69 are formed on the second metal plate 65b. Since the first and second guide portions 66 and 69 of the second storage chamber 63 are constructed in the same manner as those of the first storage chamber 62, they are designated by like reference numerals, and a description of those portions is omitted.

As shown in FIGS. 8, 17A and 18, the left-hand upright plate 41a of the housing 36 has a pair of quadrangular apertures 73. The apertures 73 are situated between the loading gate 44 and the first guide portions 66 and are spaced in the height direction of the housing 36. Each aperture 73 includes a first opening edge portion 73a adjacent to the gate 44 and a second opening edge portion 73b adjacent to each corresponding first guide portion 66. The first and second opening edge portions 73a and 73b extend in the height direction of the housing 36.

A first engaging wall 74 as a first engaging portion is formed on the first opening edge portion 73a of the aperture 73. The first engaging wall 74 is formed by rectangularly turning back that part of the upright plate 41a which faces the first opening edge portion 73a. The first engaging wall 74 slightly projects into the first storage chamber 62 and extends in the height direction of the housing 36. A second engaging wall 75 as a second engaging portion is formed on the second opening edge portion 73b of the aperture 73. The second engaging wall 75 is formed by rectangularly turning back that part of the upright plate 41a which faces the second opening edge portion ' 73b. The second engaging wall 75 slightly projects into the first storage chamber 62 and extends in the height direction of the housing 36. The first and second engaging walls 74 and 75 face each other with the aperture 73 between them, and are arranged at a space in the direction of insertion of each hard disc drive module 57.

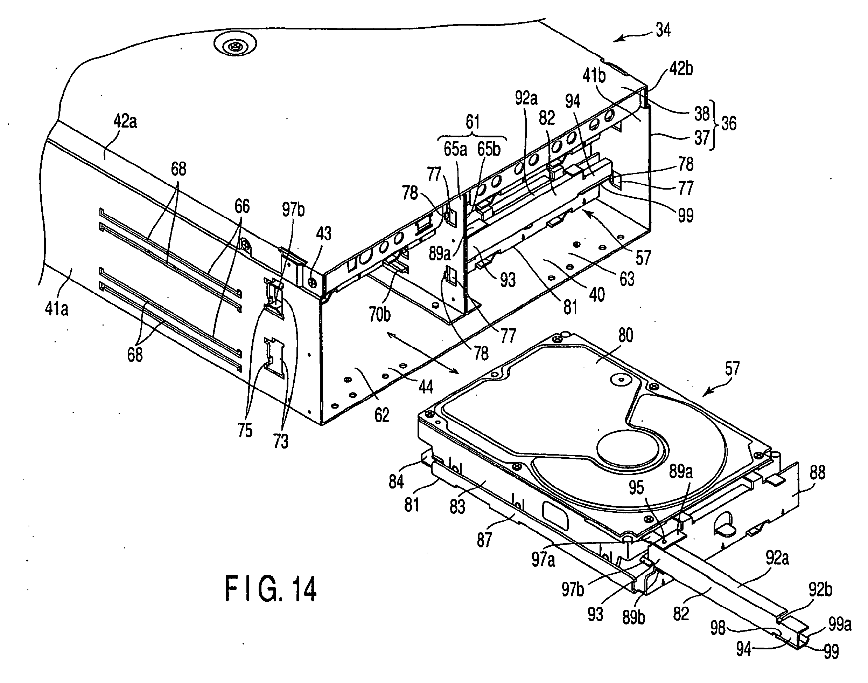

As seen from FIG. 14, moreover, a pair of quadrangular apertures 77 open in the first metal plate 65a that faces the first storage chamber 62. The apertures 77 are situated between the loading gate 44 and the second guide portions 69 and are spaced in the height direction of the housing 36. A third engaging wall 78 as a third engaging portion is formed on the opening edge portion of each aperture 77. The third engaging wall 78 is formed by rectangularly raising that part of the first metal plate 65a which faces the opening edge portion of the aperture 77. The third engaging wall 78 slightly projects into the first storage chamber 62 and extends in the height direction of the housing 36.

The second metal plate 65b that faces the second storage chamber 63 is formed having an aperture 73 and first and second engaging walls 74 and 75 that resemble those of the left-hand upright plate 41a. As seen from FIG. 14, moreover, the right-hand upright plate 41b of the housing 36 is formed having an aperture 77 and a third engaging wall 78 that resemble those of the first metal plate 65a. Since the first to third engaging walls 74, 75 and 78 are constructed in the same manner as those of the first storage chamber 62, they are designated by like reference numerals, and a description of those walls is omitted.

As shown in FIGS. 12 to 14, each hard disc drive module 57 is provided with a hard disc drive (hereinafter referred to as HDD) 80 as a main body, a tray 81, and an operating lever 82 for loading-unloading operation.

The HDD 80 is provided with a flat casing 83, which contains therein magnetic discs, magnetic head, carriage assembly (not shown), etc., a control substrate 84 fixed to the bottom face of the casing 83, and second connectors 85 mounted on the substrate 84. The second connectors 85 are situated on the front end portion of the casing 83, and are removably connected to their corresponding first connectors 59 when the hard disc drive module 57 is loaded into the first or second storage chamber 62 or 63.

The tray 81 is formed of a sheet-metal-stamped piece. The tray 81 has a plane shape a little larger than that of the casing 83 of the HDD 80. The casing 83 is screwed to the tray 81.

Flange-shaped sidewalls 87 are formed individually on the left- and right-hand side edge portions of the tray 81. The side walls 87 extend upward from the side edge portions of the tray 81, individually. The sidewalls 87 can be slidably inserted into the space between the guide walls 67a and 67b of the first guide portions 66 and the guide walls 70a and 70b of the second guide portions 69 through the loading gate 44. Thus, the tray 81 can be inserted horizontal into the first or second storage chamber 62 or 63 through the gate 44, and can slide along the first and second guide portions 66 and 69 in the chamber 62 or 63.

When the sidewalls 87 of the tray 81 are inserted into the space between the guide walls 67a, 67b, 70a and 70b, the notches 68 of the upright plates 41a and 41b are closed by means of the sidewalls 87 from inside the first and second storage chambers 62 and 63, as shown in FIG. 15B. Thus, foreign substances such as dust can be prevented from getting into the storage chambers 62 and 63 through the notches 68.

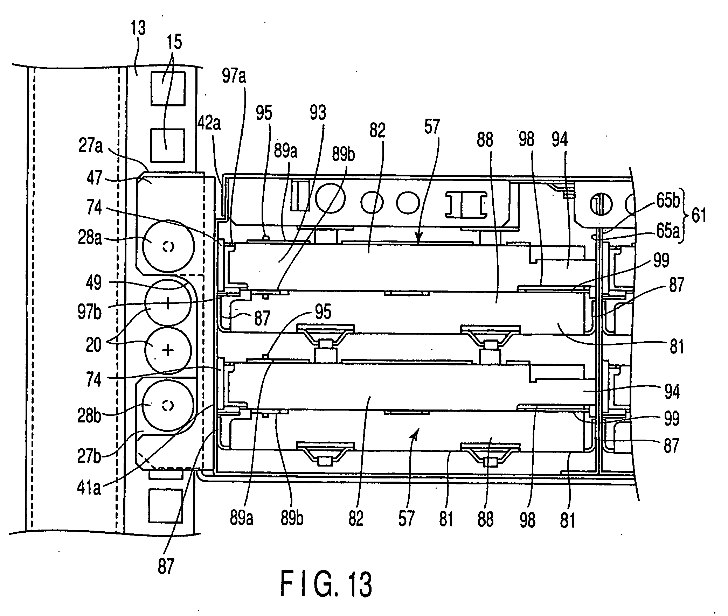

As shown in FIGS. 13 and 14, each tray 81 has an end wall 88 at the end portion on the opposite side of the HDD 80 from the second connectors 85. The end wall 88 covers the rear end portion of the HDD 80, and a pair of lever supporting portions 89a and 89b are formed on the left-hand end portion of the end wall 88. The lever supporting portions 89a and 89b project horizontally backward from the end wall 88, and are spaced from each other in the vertical direction of the end wall 88.

The operating lever 82 is formed of a sheet-metal-stamped piece, and has the shape of a straight rod. The lever 82 has a pair of finger catch portions 92a and 92b on its upper and lower edge portions, individually. The finger catch portions 92a and 92b extend horizontally from the upper and lower edge portions of the lever 82 and face each other.

The length of the operating lever 82 is equal to the width of the tray 81. The lever 82 has a bearing portion 93 at one end thereof and an operating end portion 94 at the other end. The bearing portion 93 is interposed between the lever supporting portions 89a and 89b of the end wall 88, and is rockably supported on the supporting portions 89a and 89b by means of a pivot 95.

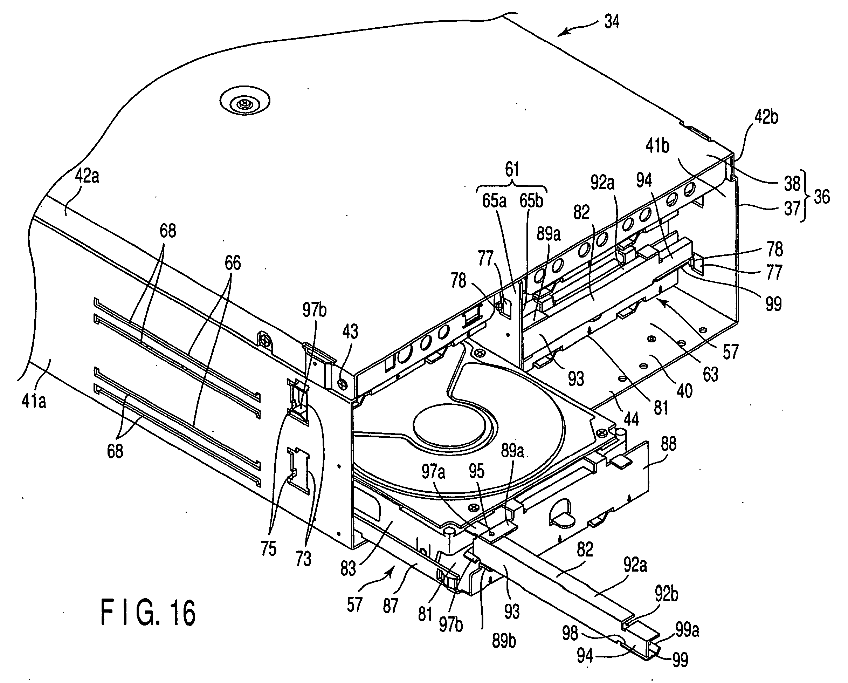

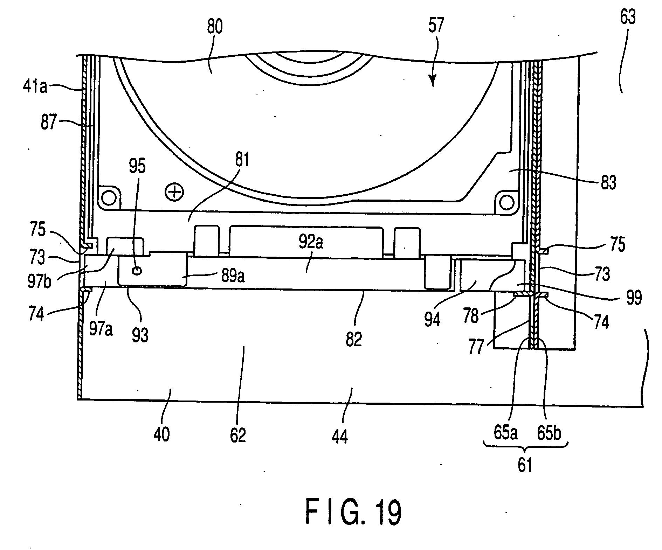

If an operator rotates the operating lever 82 with his/her fingertips on its operating end portion 94, the lever 82 can rock for about 90° between a first position shown in FIGS. 14 and 16 and a second position shown in FIG. 19. When the operating lever 82 is in the first position, it extends straight in the direction of insertion of the hard disc drive module 57. In this state, the operating end portion 94 of the lever 82 is kept at the longest distances from the HDD 80 and the tray 81. When the lever 82 is in the second position, it extends in the width direction of the tray 81. In this state, the lever 82 extends substantially at right angles to its extending direction in the first position, and its operating end portion 94 adjoins the end wall 88 of the tray 81.

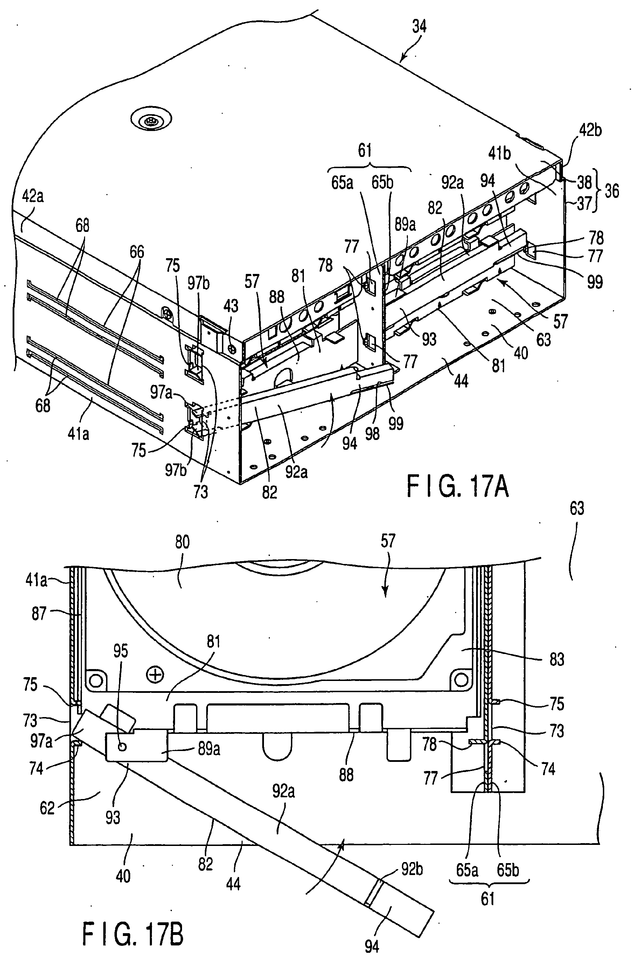

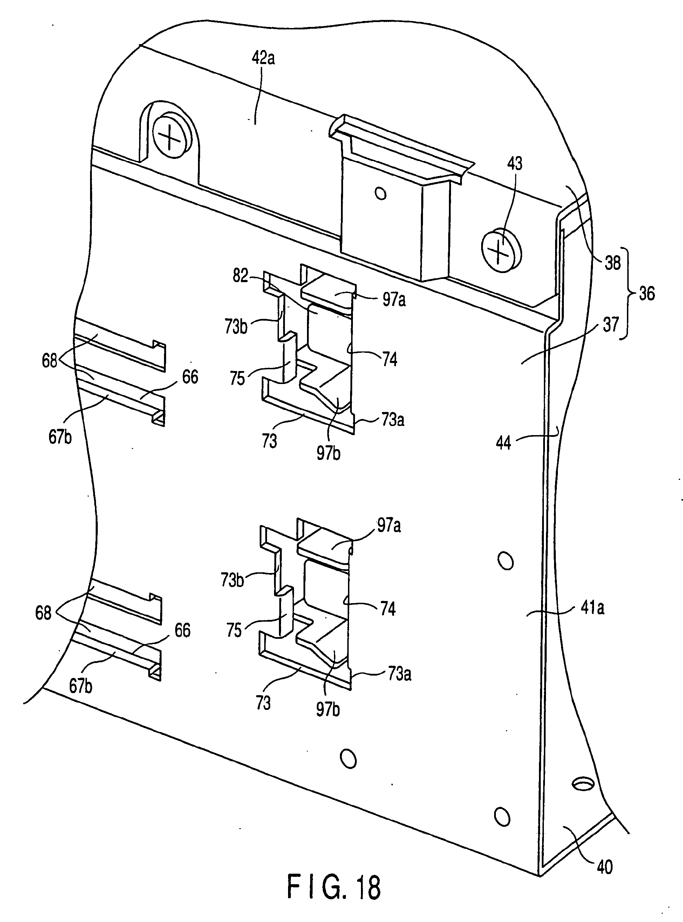

As shown in FIGS. 17A and 18, the operating lever 82 has first and second push lugs 97a and 97b. The first push lug 97a is formed integrally with the upper finger catch portion 92a and projects on the opposite side of the bearing portion 93 to the operating end portion 94. The second push lug 97b is formed integrally with the lower finger catch portion 92b and projects on the opposite side of the baring portion 93 to the operating end portion 94.

When the operating lever 82 is in the second position, therefore, the respective distal ends of the first and second push lugs 97a and 97b slightly project outward from the left-hand sidewall 87 of the tray 81, as shown in FIG. 19. When the tray 81 is held in the first or second storage chamber 62 or 63, the first push lug 97a is situated near the upper end of the first engaging wall 74 of the housing 36, as seen from FIG. 18. Likewise, the second push lug 97b is situated near the lower end of the second engaging wall 75.

A slit 98 is cut in the operating end portion 94 of the operating lever 82. The slit 98 is situated at a corner portion that is continuous with the lower finger catch portion 92b, and opens in the distal end of the operating end portion 94. Thus, that part of the lower finger catch portion 92b which corresponds to the operating end portion 94 is separated from a body portion 91 and constitutes a stopper portion 99 that can be elastically deformed in the vertical direction. The stopper portion 99 is situated in a position such that it faces the third engaging wall 78 of the housing 36 when the operating lever 82 of the tray 81 in the first or second storage chamber 62 or 63 is rocked to the second position. As seen from FIG. 16, the distal end portion of the stopper portion 99 forms a slope portion 99a that extends diagonally upward.

The following is a description of steps of procedure for loading into and unloading one of the hard disc drive modules 57 from the first storage chamber 62 of the server 1 constructed in this manner.

First, the operating lever 82 is rocked to the first position, as shown in FIGS. 14 and 16. As this is done, the first and second push lugs 97a and 97b of the lever 82 are situated inside the left-hand sidewall 87 of the tray 81.

Then, the hard disc drive module 57 is kept horizontal and inserted into the first storage chamber 62 through the opening 10 of the stand 2 and the loading gate 44 of the housing 36 with the second connectors 85 headmost. More specifically, the sidewalls 87 of the tray 81 are inserted into the spaces between the guide walls 67a and 67b of the first guide portions 66 and the guide walls 70a and 70b of the second guide portions 69, and the tray 81 is pushed along the guide walls 67a, 67b, 70a and 70b into the first storage chamber 62.

When the second connectors 85 of the hard disc drive module 57 reach a position just short of the first connectors 59, the first push lug 97a of the operating lever 82 faces the first engaging wall 74 of upright plate 41a. If the lever 82 is rocked Counterclockwise from the first position to the second position in this state, as indicated by the arrows in FIGS. 17A and 17B, an edge portion of the first push lug 97a of the lever 82 runs against the distal end of the first engaging wall 74. If.the operating lever 82 is rocked further, the region of contact between the first push lug 97a and the first engaging wall 74 is subjected to a force to push in the tray 81 toward the first connectors 59, so that the tray 81 is forced in the first storage chamber 62, supported by the contact region. When the operating lever 82 reaches the second position shown in FIG. 19, the second connectors 85 of the hard disc drive module 57 are entirely connected to their corresponding first connectors 59 of the circuit board 58.

When the operating lever 82 reaches a position just short of the second position, the slope portion 99a of the stopper portion 99 runs against the third engaging wall 78 of the partition plate 61. As the lever 82 is then rocked toward the second position, the stopper portion 99 is elastically deformed upward guided by the region of contact between the slope portion 99a and the third engaging wall 78. The moment the connection between the second connectors 85 and the first connectors 59 is completed, the stopper portion 99 gets over the third engaging wall 78 and is elastically caught by the wall 78.

Thereupon, the first push lug 97a and the stopper portion 99 of the operating lever 82 are kept caught by the first and third engaging walls 74 and 78, respectively. Thus, the hard disc drive module 57 is locked in the first storage chamber 62 by means of the lever 82, whereupon setting the module 57 in the chamber 62 is completed.

The following is a description of steps of procedure for taking out the hard disc drive module 57 from the first storage chamber 62. First, the operator inserts his/her fingertips into the loading gate 44 of the housing 36, and pushes up the stopper portion 99 of the operating lever 82 with the fingertips. Thereupon, stopper portion 99 is elastically deformed and disengaged from the third engaging wall 78. If the stopper portion 99 and the third engaging wall 78 are disengaged from each other, the operating lever 82 is rocked clockwise from the second position to the first position, as indicated by the arrow in FIG. 21.

When the operating lever 82 is held in the second position, the second push lug 97b of the lever 82 is situated in a position just short of the second engaging wall 75 of the upright plate 41a. If the operating lever 82 is rocked from the second position toward the first position, therefore, a corner portion of the second push lug 97b advances toward the second engaging wall 75 and runs against the wall 75 before long, as seen from FIG. 21.

If the operating lever 82 is rocked further, the region of contact between the second push lug 97b and the second engaging wall 75 is subjected to a force to push out the tray 81 away from the first connectors 59, so that the tray 81 is forced out of the first storage chamber 62, supported by the contact region. Thereupon, operation for disconnecting the first and second connectors 59 and 85 is started. When the operating lever 82 reaches a middle position intermediate between the first and second positions, the second push lug 97b leaves the second engaging wall 75. In synchronism with this, the second connectors 85 are drawn out of the first connectors 59.

Finally, the operator holds the operating lever 82 and pulls it toward him/her. Thereupon, the hard disc drive module 57 can be taken out of the first storage chamber 62.

Since steps of procedure for loading into and unloading the hard disc drive module 57 from the second storage chamber 63 of the housing 36 are similar to the steps of procedure for the first storage chamber 62, a description of those steps is omitted.

According to the extension unit 34 constructed in this manner, the second connectors 85 of the hard disc drive module 57 can be connected to or disconnected from the first connectors 59 of the housing 36 by simply rocking the operating lever 82 that is incorporated in the tray 81. Thus, the hard disc drive module 57 can be loaded and unloaded with ease.

According to the arrangement described above, moreover, the first to third engaging walls 74, 75 and 78 that catch the first and second push lugs 97a and 97b and the stopper portion 99 of the operating lever 82 project from the upright plates 41a and 41b of the housing 36 and the partition plate 61 toward the first and second storage chambers 62 and 63. Accordingly, there is no possibility of the region of contact between the lever 82 and the housing 36 projecting out of the housing 36 or advancing into one of the adjacent first and second storage chambers 62 and 63. In consequence, the overall length of the operating lever 82 can be made shorter than the distance between the partition plate 61 and the upright plate 41a or 41b, and the tray 81 including the lever 82 can be made narrow and compact.

If the respective inside spaces of the first and second storage chambers 62 and 63 are narrowed to meet the demand for the miniaturization of the individual extension units 34, therefore, the hard disc drive modules 57 can be set individually in the storage chambers 62 and 63 without effort.

Thus, each two hard disc drive modules 57 can be arranged side by side with the partition plate 61 between them in each housing 36 that has a width adjusted to half that of each shelf 25. In consequence, four hard disc drive modules 57 can be arranged at the maximum in a two-by-two matrix in each housing 36, as seen from FIG. 11, so that high-density mounting can be realized to meet the demand for the miniaturization of the housing 36.

According to the server 1 constructed in this manner, each shelf 25 is expected to be thinned to reduce the weight of the stand 2. Since two extension units 34 are placed on each shelf 25, however, the central portion of the shelf 25 with respect to its width direction sometimes may be caused to project downward by the weight of the extension units 34 in the case where four hard disc drive modules 57 are stored in the housing 36 of each extension unit 34.

Possibly, this problem may be solved by superposing on and screwing the bottom plate 40 of each housing 36 to each shelf 25. By doing this, the bottom plate 40 and the shelf 25 can be coupled integrally to each other. Therefore, the shelf 25 can be reinforced with the bottom plate 40 of the housing 36, so that the same effect can be enjoyed as in the case where the thickness of the shelf 25 is increased. Thus, the weight of the extension units 34 can be resisted satisfactorily, so that the shelf 25 can be prevented from being deformed.

As seen from FIG. 1, the shelves 25 are stacked in layers in the equipment storage chamber 9 of the stand 2. If there is another shelf 25 right under one shelf 25, therefore, the second shelf 25 may possibly hinder the first one from being screwed to the bottom plate 40 of the housing 36 concerned.

However, each shelf 25 of the present embodiment can be drawn out ahead of the stand 2 within the range of the length of the slit 31 in each side plate 26 thereof. If the respective screwed portions of the housing 36 and the bottom plate 40 are situated at the front end portion of the shelf 25 that is to be drawn out foremost, therefore, the shelf 25 can be kept drawn out ahead of the stand 2 as it is screwed to the bottom plate 40. Thus, another shelf 25 that directly underlies the first one never hinders the screwing operation, so that the operating efficiency is satisfactory.

It is to be understood that the present invention is not limited to the embodiment described above, and that various changes and modifications may be effected therein by one skilled in the art without departing from the scope or spirit of the invention.

For example, the number of hard disc drive modules that can be set in each housing is not limited to four, and may be varied depending on the size of the stand and the like.

Further, the main body of each module supported on the tray is not limited to the HDD, and may alternatively be an optical disc drive, magneto-optical disc drive, or DVD drive, for example.

Furthermore, a plastic or rubber cover may be attached to the edge of each finger catch portion of the operating lever. With use of this arrangement, the operating lever can be made easier to pinch between fingertips, so that its handleability can be improved.

## Claims

1. An information processing apparatus comprising:
a housing (36) having a loading gate (44) at one end thereof, the housing (36) including a pair of upright plates (41a, 41b) facing each other, a storage chamber (53) located between the upright plates (41a, 41b) and a first connector (59) located in the storage chamber (53); and
a module (57) capable of being removably loaded into the storage chamber through the loading gate (44), the module (57) including a main body (80) having a second connector (85) detachably connected to the first connector (59), a tray (81) supporting the main body (80) and capable of being inserted into the storage chamber (53), and an operating lever (82) located at an end portion of the tray (81) on the side remote from the second connector (85), the operating lever (82) being rockable between a first position in which the operating lever (82) extends in the direction of insertion of the tray (81) and a second position in which the operating lever (82) extends along the end portion of the tray (81) so as to cross the first position,
**characterized in that**
the housing (36) has first and second engaging portions (74, 75) projecting from one upright plate (41a) into the storage chamber (53) and a third engaging portion (78) projecting from the other upright plate (41b) into the storage chamber (53), and
the operating lever (82) includes:
(i) a first push portion (97a), adapted to touch the first engaging portion (74) of the housing (36) to push in the module (57) toward the first connector (59) when the operating lever (82) is rocked from the first position to the second position in the storage chamber (53),
(ii) a second push portion (97b), adapted to touch the second engaging portion (75) of the housing (36) to push out the module (57) away from the first connector (59) when the operating lever (82) is rocked from the second position to the first position in the storage chamber (53), and
(iii) a stopper portion (99) adapted to be elastically deformed to be detachably engaged with the third engaging portion (78) of the housing (36) and to retain the operating lever (82) in the second position, when the operating lever (82) is rocked from the first position to the second position.

2. An information processing apparatus according to claim 1, wherein said first and second engaging portions are spaced in the direction of insertion of the tray (81).

3. An information processing apparatus according to claim 1, wherein said housing (36), said tray (81), and said operating lever (82) are formed of a metallic material each.

4. An information processing apparatus according to claim 1, wherein said tray (81) includes a pair of sidewalls (87) adapted to come slidably into contact with the upright plates (41a, 41b) of the housing (36) when the tray (81) is loaded into the storage chamber (53), and each of said upright plates (41a, 41b) of the housing (36) includes a pair of guide walls (67a, 67b) raised so as to project into the storage chamber (53) and capable of slidably holding one sidewall (87) of the tray (81).

5. An information processing apparatus according to claim 4 wherein each of said upright plates (41a, 41b) has slit-shaped notches (68) formed by raising the guide walls (67a, 67b), the notches (68) being situated between the guide walls (67a, 67b) and adapted to be closed from inside the storage chamber (53) by means of the one sidewall of the tray (81) when the tray (81) is loaded into the storage chamber (53).

6. An information processing apparatus according to claim 1, further comprising at least one shelf (25) capable of carrying the housing (36) thereon and a stand (2) supporting the shelf (25).

## Patentansprüche

1. Informationsverarbeitungsvorrichtung mit:
einem Gehäuse (36) mit einem Ladezugang (44) an einem Ende, wobei das Gehäuse (36) umfasst: ein Paar von aufrechten Platten (41a, 41b), die einander gegenüberliegen, eine Lagerkammer (53), die zwischen den aufrechten Platten (41a, 41b) angeordnet ist, und einen ersten Verbinder (59), der in der Lagerkammer (53) angeordnet ist; und
einem Modul (57), das im Stande ist, entfernbar in die Lagerkammer durch den Ladezugang (44) geladen zu werden, wobei das Modul (57) umfasst: einen Hauptkörper (80) mit einem zweiten Verbinder (85), der abnehmbar mit dem ersten Verbinder (59) verbunden ist, eine Tragevorrichtung (81), die den Hauptkörper (80) trägt und geeignet ist, in die Lagerkammer (53) eingeführt zu werden, und einen Betätigungshebel (82), der an einem Endabschnitt der Tragevorrichtung (81) an einer Seite fern von dem zweiten Verbinder (85) angeordnet ist, wobei der Betätigungshebel (82) zwischen einer ersten Stellung, bei der sich der Betätigungshebel (82) in der Richtung der Einführung der Tragevorrichtung (81) erstreckt, und einer zweiten Stellung, bei der sich der Betätigungshebel (82) entlang des Endabschnitts der Tragevorrichtung (81) erstreckt, um die erste Stellung zu kreuzen, hin und her schwenkbar ist,
**dadurch gekennzeichnet, dass**
das Gehäuse (36) aufweist: erste und zweite Eingriffs-Abschnitte (74, 75), die von einer aufrechten Platte (41a) in die Lagerkammer (53) hervorstehen, und einen dritten Eingriffs-Abschnitt (78, der von der anderen aufrechten Platte (41b) in die Lagerkammer (53) hineinragt, und
wobei der Betätigungshebel (82) umfasst:
(i) einen ersten Drückabschnitt (97a), der angepasst ist, um den ersten Eingriffs-Abschnitt (74) des Gehäuses (36) zu berühren, um das Modul (57) zu dem ersten Verbinder (59) hin zu drücken, wenn der Betätigungshebel (82) von der ersten Stellung zu der zweiten Stellung in der Lagerkammer (53) geschwenkt wird,
(ii) einen zweiten Drückabschnitt (97b), der angepasst ist, um den zweiten Eingriffs-Abschnitt (75) des Gehäuses (36) zu berühren, um das Modul (57) von dem ersten Verbinder (59) weg heraus zu drücken, wenn der Betätigungshebel (82) von der zweiten Stellung zu der ersten Stellung in der Lagerkammer (53) geschwenkt wird, und
(iii) einen Anschlagabschnitt (99), der angepasst ist, um elastisch verformt zu werden, um abnehmbar mit dem dritten Ineingriffnahme-Abschnitt (78) des Gehäuses (36) in Eingriff genommen zu werden und den Betätigungshebel (82) in der zweiten Stellung zu halten, wenn der Betätigungshebel (82) von der ersten Stellung zu der zweiten Stellung geschwenkt wird.

2. Informationsverarbeitungsvorrichtung gemäß Anspruch 1, bei der die ersten und zweiten Eingriffs-Abschnitte in der Richtung der Einführung der Tragevorrichtung (81) beabstandet sind.

3. Informationsverarbeitungsvorrichtung gemäß Anspruch 1, bei der das Gehäuse (36), die Tragevorrichtung (81) und der Betätigungshebel (82) jeweils aus einem metallischen Material gebildet sind.

4. Informationsverarbeitungsvorrichtung gemäß Anspruch 1, bei der die Tragevorrichtung (81) ein Paar von Seitenwänden (87) umfasst, die angepasst sind, um verschiebbar mit den aufrechten Platten (41a, 41b) des Gehäuses (36) in Berührung zu kommen, wenn die Tragevorrichtung (81) in die Lagerkammer (53) geladen wird, und jede der aufrechten Platten (41a, 41b) des Gehäuses (36) ein Paar von Führungswänden (67a, 67b) aufweist, die errichtet sind, um in die Lagerkammer (53) hineinzuragen, und geeignet sind, eine Seitenwand (87) der Tragevorrichtung (81) verschiebbar zu halten.

5. Informationsverarbeitungsvorrichtung gemäß Anspruch 4, bei der jede der aufrechten Platten (41a, 41b) schlitzförmige Aussparungen (68) aufweist, die durch Errichten der Führungswände (67a, 67b) gebildet werden, wobei die Aussparungen (68) zwischen den Führungswänden (67a, 67b) liegen und angepasst sind, um von innerhalb der Lagerkammer (53) mittels der einen Seitenwand der Tragevorrichtung (81) geschlossen zu werden, wenn die Tragevorrichtung (81) in die Lagerkammer (53) geladen wird.

6. Informationsverarbeitungsvorrichtung gemäß Anspruch 1, ferner mit mindestens einem Regalfach (25), das in der Lage ist, das Gehäuse (36) darauf zu tragen, und einem Regal (2), der das Regalfach (25) trägt.

## Revendications

1. Appareil de traitement d'informations comprenant :
un boîtier (36) présentant une porte de chargement (44) à une extrémité de celui-ci, le boîtier (36) comprenant une paire de plaques verticales (41a, 41b) se faisant face, une chambre de stockage (53) située entre les plaques verticales (41a, 41b) et un premier connecteur (59) situé dans la chambre de stockage (53) ; et
un module (57) capable d'être chargé de manière amovible dans la chambre de stockage par la porte de chargement (44), le module (57) comprenant un corps principal (80) présentant un deuxième connecteur (85) relié de manière détachable au premier connecteur (59), un plateau (81) supportant le corps principal (80) et capable d'être introduit dans la chambre de stockage (53), et un levier de manoeuvre (82) situé à une partie d'extrémité du plateau (81) du côté distant du deuxième connecteur (85), le levier de manoeuvre (82) pouvant basculer entre une première position dans laquelle le levier de manoeuvre (82) s'étend dans la direction d'introduction du plateau (81) et une deuxième position dans laquelle le levier de manoeuvre (82) s'étend le long de la partie d'extrémité du plateau (81) de manière à croiser la première position,
**caractérisé en ce que**
le boîtier (36) présente des première et deuxième parties d'engagement (74, 75) se projetant d'une plaque verticale (41a) dans la chambre de stockage (53) et une troisième partie d'engagement (78) se projetant de l'autre plaque verticale (41b) dans la chambre de stockage (53), et
le levier de manoeuvre (82) comprend :
(i) une première partie de poussée (97a), adaptée pour toucher la première partie d'engagement (74) du boîtier (36) pour pousser le module (57) vers le premier connecteur (59) lorsque le levier de manoeuvre (82) est basculé de la première position vers la deuxième position dans la chambre de stockage (53),
(ii) une deuxième partie de poussée (97b), adaptée pour toucher la deuxième partie d'engagement (75) du boîtier (36) pour repousser le module (57) du premier connecteur (59) lorsque le levier de manoeuvre (82) est basculé de la deuxième position vers la première position dans la chambre de stockage (53), et
(iii) une partie de butée (99) adaptée pour être déformée élastiquement afin d'être engagée de manière détachable avec la troisième partie d'engagement (78) du boîtier (36) et de retenir le levier de manoeuvre (82) dans la deuxième position, lorsque le levier de manoeuvre (82) est basculé de la première position vers la deuxième position.

2. Appareil de traitement d'informations selon la revendication 1, dans lequel lesdites première et deuxième parties d'engagement sont espacées dans la direction d'introduction du plateau (81).

3. Appareil de traitement d'informations selon la revendication 1, dans lequel ledit boîtier (36), ledit plateau (81) et ledit levier de manoeuvre (82) sont composés chacun d'un matériau métallique.

4. Appareil de traitement d'informations selon la revendication 1, dans lequel ledit plateau (81) comprend une paire de parois latérales (87) adaptées pour venir en contact de façon coulissante avec les plaques verticales (41a, 41b) du boîtier (36) lorsque le plateau (81) est chargé dans la chambre de stockage (53), et chacune desdites plaques verticales (41a, 41b) du boîtier (36) comprend une paire de parois de guidage (67a, 67b) élevées de manière à se projeter dans la chambre de stockage (53) et capables de maintenir de façon coulissante une paroi latérale (87) du plateau (81).

5. Appareil de traitement d'informations selon la revendication 4, dans lequel chacune desdites plaques verticales (41a, 41b) présente des encoches en forme de fente (68) formées en élevant les parois de guidage (67a, 67b), les encoches (68) étant situées entre les parois de guidage (67a, 67b) et adaptées pour être fermées de l'intérieur de la chambre de stockage (53) au moyen d'une paroi latérale du plateau (81) lorsque le plateau (81) est chargé dans la chambre de stockage (53).

6. Appareil de traitement d'informations selon la revendication 1, comprenant en outre au moins une tablette (25) capable de porter le boîtier (36) sur celle-ci et un socle (2) supportant la tablette (25).
